(19) Europäisches Patentamt
European Patent Office
Office européen des brevets

(11) **EP 3 520 199 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **17754348.5**

(22) Anmeldetag: **17.08.2017**

(51) Int Cl.:
**H02K 1/27** *(2006.01)*

(86) Internationale Anmeldenummer:
**PCT/EP2017/070867**

(87) Internationale Veröffentlichungsnummer:
**WO 2018/059828 (05.04.2018 Gazette 2018/14)**

(54) **ELEKTRISCHE MASCHINE UMFASSEND EINEN ROTOR UND EINEN STATOR**

ELECTRIC MACHINE COMPRISING A ROTOR AND A STATOR

MACHINE ÉLECTRIQUE COMPORTANT UN ROTOR ET UN STATOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2016 DE 102016218510**
**22.02.2017 DE 102017202858**
**31.05.2017 DE 102017209207**

(43) Veröffentlichungstag der Anmeldung:
**07.08.2019 Patentblatt 2019/32**

(73) Patentinhaber: **Robert Bosch GmbH**
**70442 Stuttgart (DE)**

(72) Erfinder:
• **HEUSER, Patrick**
**70372 Stuttgart (DE)**
• **KOL, Murat**
**70437 Stuttgart (DE)**

(56) Entgegenhaltungen:
**EP-A2- 2 485 370      JP-A- 2000 102 202**
**US-A1- 2013 147 299**

## Beschreibung

Gebiet der Erfindung

Die Erfindung betrifft eine elektrische Maschine umfassend einen Rotor und einen Stator.

Stand der Technik

Eine Vielzahl von elektrischen Maschinen mit einem Rotor und einem Stator sind bekannt. Bei elektrischen Maschinen ist insbesondere der magnetische Rotorfluss zu beachten. Ein hoher Rotorfluss ist erstrebenswert.

Die US 8,994,240 B beschreibt eine elektrische Maschine, bei der zwei Paare von Magnettaschen zum Aufnehmen von Magneten in jeweils V-förmiger Anordnung ausgebildet sind. Ziel hierbei ist, einen maximalen Rotorfluss zu erreichen.

Die US 2013/0147299 A1 offenbart einen Rotor mit Magnettaschen.

Nachteilig hieran ist jedoch, dass eine derartige elektrische Maschine in der Regel eine hohe Drehmomentwelligkeit aufweist. Auch führt bei bisher bekannten elektrischen Maschinen der erhöhte Rotorfluss üblicherweise zu einer Erhöhung der Verluste. Vor allem im Feldschwächebereich werden im Allgemeinen hohe Verluste erzeugt.

Offenbarung der Erfindung

Vorteile der Erfindung

Ausführungsformen der vorliegenden Erfindung können in vorteilhafter Weise ermöglichen, eine elektrische Maschine bereitzustellen, die einen hohen Rotorfluss und damit ein hohes Drehmoment und eine hohe Leistung erzeugt. Gleichzeitig weist die elektrische Maschine eine geringe Drehmomentwelligkeit und damit auch einen geringen Geräuschpegel auf. Zudem weist die elektrische Maschine geringe Verluste, eine hohe Drehzahlfestigkeit und eine gute Entmagnetisierungsfähigkeit auf. Auch lässt sich die elektrische Maschine kostengünstig herstellen.

Gemäß einem ersten Aspekt der Erfindung wird eine elektrische Maschine nach Anspruch 1 vorgeschlagen.

Ideen zu Ausführungsformen der vorliegenden Erfindung können unter anderem als auf den nachfolgend beschriebenen Gedanken und Erkenntnissen beruhend angesehen werden.

Genaue Untersuchungen einer rechnerbasierten "Multi-Ziel-Optimierung" haben ergeben, dass die Doppel-V-Anordnung von Magnettaschen mit bestimmten Winkeln zu einem hohen Rotorfluss bei gleichzeitig geringer Drehmomentwelligkeit und niedrigen Verlusten führt.

Gemäß einer Ausführungsform sind die Magnettaschen des ersten Paares zueinander beabstandet angeordnet und die Magnettaschen des zweiten Paares zueinander beabstandet angeordnet, wobei der kleinste Abstand zwischen den Magnettaschen des zweiten Paares größer ist als der kleinste Abstand zwischen den Magnettaschen des ersten Paares. Ein Vorteil hiervon ist, dass in der Regel die Drehzahlfestigkeit gesteigert werden kann.

Gemäß einer Ausführungsform sind die Magnettaschen des ersten Paares in einem kreissektorförmigen Bereich zwischen den Magnettaschen des zweiten Paares angeordnet, wobei beide Paare von Magnettaschen dieselbe Symmetrieachse aufweisen. Hierdurch wird üblicherweise der Rotorfluss erhöht.

Gemäß einer Ausführungsform sind die Magnettaschen des ersten Paares zueinander beabstandet angeordnet, wobei der kleinste Abstand zwischen den Magnettaschen des ersten Paares eine Breite im Bereich von ca. 0,5 mm bis ca. 1,5 mm, insbesondere im Bereich von ca. 0,5 mm bis ca. 1,2, mm aufweist, wobei die Magnettaschen des zweiten Paares zueinander beabstandet angeordnet sind, wobei der kleinste Abstand zwischen den Magnettaschen des zweiten Paares eine Breite im Bereich von ca. 2,0 mm bis ca. 4,0 mm, insbesondere im Bereich von ca. 2,0 mm bis ca. 3,0 mm, aufweist. Ein Vorteil hiervon ist, dass in der Regel ein noch höherer Rotorfluss mit geringen Verlusten erreicht werden kann.

Gemäß einer Ausführungsform weisen die Magnettaschen des ersten Paares und/oder des zweiten Paares einen kleinsten Abstand zu dem Umfangsrand des Rotors von ca. 0,5 mm bis ca. 1,5 mm auf. Hierdurch wird üblicherweise der Rotorstreufluss reduziert und der drehmomenterzeugende Rotorfluss weiter erhöht.

Gemäß einer Ausführungsform weisen die Magnettaschen des ersten Paares und/oder die Magnettaschen des zweiten Paares jeweils einen Randbereich auf, der einen sich zur Symmetrieachse hin vergrößernden Abstand zu dem Umfangsrand des Rotors aufweist. Ein Vorteil hiervon ist üblicherweise eine Erhöhung der Drehzahlfestigkeit.

Gemäß einer Ausführungsform weist der Rotor entlang seiner Umfangsrichtung gleichartig aufgebaute Polsegmente auf, wobei die jeweils zueinander unmittelbar benachbarten Polsegmente durch Polgrenzen voneinander getrennt sind, wobei die Magnettaschen des zweiten Paares jeweils einen elektrischen Winkelabstand im Bereich von ca. 7,5° bis ca. 35,0°, insbesondere im Bereich von ca. 7,5° bis ca. 16,0°, zu den jeweiligen unmittelbar benachbarten Polgrenzen aufweisen.

Gemäßer einer Ausführungsform beträgt der Luftspalt zwischen dem Rotor und dem Stator ca. 1,0 mm bis ca. 2,0 mm, insbesondere ca. 1,0 mm bis ca. 1,7mm. Hierdurch wird üblicherweise der Fluss geringfügig reduziert, gleichzeitig sinken aber auch die Verluste überproportional stark.

Gemäß einer Ausführungsform unterscheidet sich die Höhe der Magnettaschen des ersten Paares von der Höhe der Magnettaschen des zweiten Paares, insbesondere ist die Höhe der Magnettaschen des ersten Paares kleiner als die Höhe der Magnettaschen des zweiten Paares. Ein Vorteil hiervon ist, dass in der Regel eine hohe Entmagnetisierungsfestigkeit bei geringen Kosten erreicht wird.

Es wird darauf hingewiesen, dass einige der möglichen Merkmale und Vorteile der Erfindung hierin mit Bezug auf unterschiedliche Ausführungsformen einer elektrischen Maschine beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

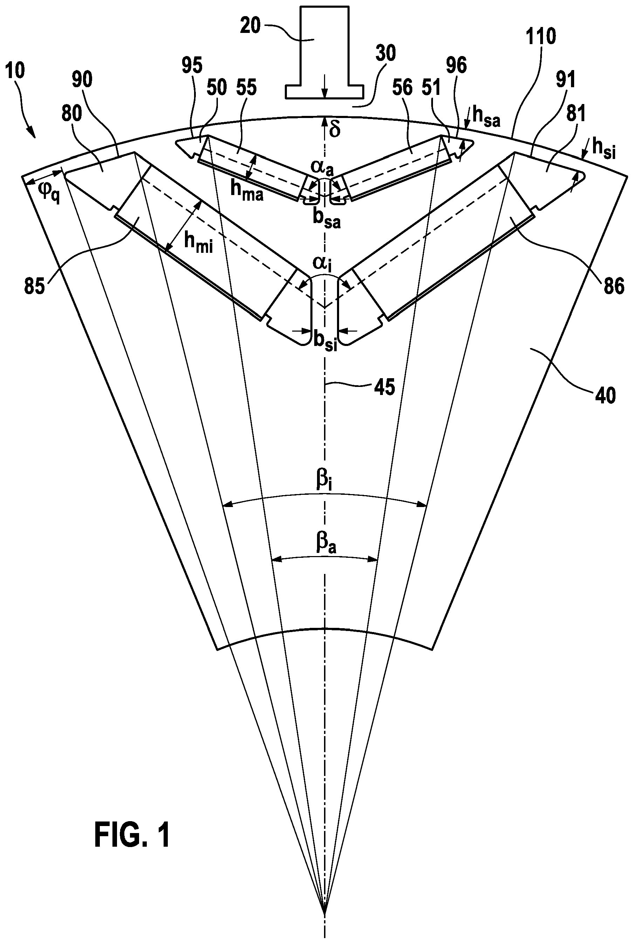

Fig. 1 zeigt     eine schematische Ansicht eines Bereichs einer Ausführungsform der erfindungsgemäßen elektrischen Maschine.

Die Figur ist lediglich schematisch und nicht maßstabsgetreu. Gleiche Bezugszeichen bezeichnen in der Figur gleiche oder gleichwirkende Merkmale.

Ausführungsformen der Erfindung

Fig. 1 zeigt eine schematische Ansicht eines Bereichs einer Ausführungsform der erfindungsgemäßen elektrischen Maschine. Die elektrische Maschine umfasst einen Rotor 10 und einen Stator 20. Die elektrische Maschine kann insbesondere eine permanenterregte Synchronmaschine sein. Die elektrische Maschine kann in Hybrid- und Elektrofahrzeugen verwendet werden.

Zwischen Rotor 10 und Stator 20 ist ein Luftspalt 30 (δ) vorhanden. Der Luftspalt 30 zwischen dem Rotor 10 und dem Stator 20 beträgt ca. 1,0 mm bis ca. 2 mm, insbesondere ca. 1,0 mm bis ca. 1,7 mm.

In der Fig. 1 ist ein Polsegment 40 des Rotors 10 dargestellt. Der Rotor 10 umfasst entlang seiner Umfangsrichtung mehrere gleichartig bzw. gleich aufgebaute Polsegmente 40. Das Polsegment 40 weist zwei Paare 50, 51, 80, 81 von Magnettaschen auf. Ein erstes Paar von Magnettaschen 50, 51, d.h. zwei zueinander gehörende Magnettaschen 50, 51, sind in Radialrichtung des Rotors 10 (in Fig. 1 von unten nach oben verlaufend) weiter außen angeordnet als ein zweites Paar von Magnettaschen 80, 81, d.h. zwei zueinander gehörende Magnettaschen 80, 81.

Die Magnettaschen 50, 51, 80, 81 sind zur Aufnahme von Permanentmagneten 55, 56, 85, 86 ausgebildet. In Fig. 1 sind Permanentmagnete 55, 56, 85, 86 in den Magnettaschen 50, 51, 80, 81 angeordnet. In jeder der Magnettaschen 50, 51, 80, 81 ist jeweils ein Permanentmagnet 55, 56, 85, 86 angeordnet. Die Permanentmagnete 55, 56, 85, 86 weisen jeweils eine kleinere Form auf als die jeweilige Magnettasche.

Die Magnettaschen 50, 51 des ersten Paares (in der Figur oben dargestellt) weisen einen mechanischen bzw. geometrischen Winkel $\alpha_a$ im Bereich von ca. 100° bis ca. 140°, insbesondere im Bereich von ca. 120° bis ca. 140° auf. Dies bedeutet, dass die Längsrichtung der beiden Magnettaschen 50, 51, die die Richtung der größten Ausdehnung der jeweiligen Magnettasche 50, 51 ist, einen mechanischen bzw. geometrischen Winkel einschließen, der im Bereich von ca. 100° bis ca. 140°, insbesondere im Bereich von ca. 120° bis ca. 140°, liegt.

Zwischen den Magnettaschen 80, 81 des zweiten Paares (in Fig. 1 unten dargestellt) ist ein mechanischer bzw. geometrischer Winkel $\alpha_i$ vorhanden, der im Bereich von ca. 65° bis ca. 112°, insbesondere im Bereich von ca. 88° bis ca. 112°, liegt. Zwischen den beiden Längsrichtungen der zwei Magnettaschen 80, 81 des zweiten Paars, wobei die Längsrichtung jeweils in Richtung der größten Ausdehnung der Magnettasche 80, 81 verläuft, ist also ein mechanischer bzw. geometrischer Winkel im Bereich von ca. 65° bis ca. 112°, insbesondere im Bereich von ca. 88° bis ca. 112°, eingeschlossen.

Die Magnettaschen 50, 51 des ersten Paares sind symmetrisch zu einer Symmetrieachse 45 bzw. Symmetrieebene angeordnet, wobei die Symmetrieachse 45 bzw. Symmetrieebene in Radialrichtung des Rotors 10 und durch den Mittelpunkt des Rotors 10 verläuft. Die Symmetrieachse bzw. Symmetrieebene 45 verläuft durch die Mitte des jeweiligen Polsegments. In Fig. 1 verläuft die Symmetrieachse 45 von oben nach unten. Die Magnettaschen 80, 81 des zweiten Paars sind ebenfalls symmetrisch zur gleichen Symmetrieachse 45 angeordnet.

Der Abstand der jeweiligen Magnettasche 50, 51, 80, 81 von der Symmetrieachse 45 wird umso größer, je geringer der Abstand zu dem Umfangsrand 110 des Rotors 10 wird. Somit sind die Magnettaschen 50, 51, 80, 81 des ersten Paars als auch des zweiten Paars jeweils V-förmig bzw. in einer Form gemäß des Buchstabens V angeordnet, wobei die Symmetrieachse 45 durch den tiefsten Punkt bzw. die Vertiefung des Buchstabens V verläuft.

Die Magnettaschen 50, 51, 80, 81 weisen jeweils einen Randbereich 90, 91, 95, 96 auf, der im Wesentlichen parallel zu dem Umfangsrand 110 verläuft. Da der Randbereich 90, 91, 95, 96 eine gerade Kante der (trapezförmigen) Magnettasche 50, 51, 80, 81 ist, während der Umfangsrand 110 des Rotors 10 ein Kreisbogen ist, liegt nur eine annähernde Parallelität vor.

Der Abstand $h_{sa}$ der Randbereiche 90, 91 des ersten Paars 50, 51 beträgt ca. 0,5 bis ca. 1,5 mm. Der Abstand $h_{si}$ der Randbereiche 95, 96 des zweiten Paars 80, 81 beträgt ca. 0,5 bis ca. 1,5 mm. Die Abstände der Randbereiche 90, 91, 95, 96 von dem Umfangsrand 110 können sich jeweils in Richtung der Symmetrieachse 45 vergrößern oder gleichbreit bleiben.

Die Magnettaschen des ersten Paars 50, 51 weisen einen kleinsten Abstand $b_{sa}$ auf, der im Bereich von ca. 0,5 bis ca. 1,5 mm, insbesondere im Bereich von ca. 0,5 bis ca. 1,2 mm liegt. Somit befindet sich zwischen den Magnettaschen 50, 51 des ersten Paars ein Steg des Rotors 10, der eine über seine Länge (in Fig. 1 von oben nach unten verlaufend) eine konstante Breite aufweist.

Die Magnettaschen 80, 81 des zweiten Paars weisen einen kleinsten Abstand $b_{si}$ auf, der im Bereich von ca. 2,0 bis ca. 4,0 mm, insbesondere im Bereich von ca. 2,0 bis ca. 3,0 mm, liegt. Somit befindet sich zwischen den Magnettaschen 80, 81 des zweiten Paars ein Steg des Rotors 10, der über seine Länge (in der Figur von oben nach unten verlaufend) eine konstante Breite aufweist.

Der Steg zwischen den Magnettaschen 50, 51 des ersten Paars ist kleiner als der Steg zwischen den Magnettaschen 80, 81 des zweiten Paars.

Das jeweilige Polsegment 40 ist durch Polgrenzen von den unmittelbar in Umfangsrichtung benachbarten Polsegmenten 40 getrennt. Die Magnettaschen 80, 81 des zweiten Paars weisen einen (kleinsten) elektrischen Winkel $\varphi_q$ von ca. 7,5° bis ca. 35,0°, insbesondere von ca. 7,5° bis ca. 16,0°, zu den Polgrenzen auf.

Die Magnettaschen 50, 51 des ersten Paars weisen einen elektrischen Polbedeckungswinkel $\beta_a$ von ca. ca. 59,5° bis ca. 80,0°, insbesondere von ca. ca. 59,5° bis ca. 72,0°, auf. Die Magnettaschen 80, 81 des zweiten Paars weisen einen elektrischen Polbedeckungswinkel $\beta_i$ von ca. 110,0° bis ca. 122,0°, insbesondere von ca. 110,0° bis ca. 116,5°, auf.

Der elektrische Winkel $\theta_{elektrisch}$ berechnet sich wie folgt aus dem mechanischen bzw. geometrischen Winkel $\theta_{mechanisch}$ bzw. umgekehrt:

$$\theta_{elektrisch} = \theta_{mechanisch} * (P/2)$$

wobei P die Anzahl der Pole des Rotors 10 ist.

Der Polbedeckungswinkel ist der elektrische Winkelbereich der vom Mittelpunkt des Rotors 10 aus gesehen von den jeweiligen Magnettaschen 50, 51, 80, 81 bedeckt wird. Der Polbedeckungswinkel bedeckt den elektrischen Winkelbereich, der sich von dem Mittelpunkt des Rotors 10 zu den Punkten der jeweiligen Magnettasche 50, 51, 80, 81 erstreckt, die sich jeweils am nächsten an dem Umfangsrand 110 des Rotors 10 und am nächsten an der Symmetrieachse 45 befinden. Die Magnettaschen 50, 51, 80, 81 weisen an diesen Stellen bzw. Punkten jeweils abgerundete Ecken auf.

Die Magnettaschen 50, 51, 80, 81 weisen jeweils die Form eines Trapez' auf. Die kurze Grundseite der Magnettasche 50, 51, 80, 81 ist jeweils dem Umfangsrand 110 des Rotors 10 zugewandt und die lange Grundseite der Magnettasche 50, 51, 80, 81 ist dem Umfangsrand 110 des Rotors 10 abgewandt. Der Punkt für die Bestimmung des elektrischen Polbedeckungswinkels ist der Kontaktpunkt bzw. die Ecke zwischen der kurzen Grundseite des Trapez' und dem dem Umfangsrand 110 des Rotors 10 zugewandten Schenkel der Magnettasche 50, 51, 80, 81. Der dem Umfangsrand 110 des Rotors 10 zugewandte Schenkel bildet jeweils den Randbereich 90, 91, 95, 96 der Magnettasche 50, 51, 80, 81.

In den Magnettaschen 50, 51, 80, 81 sind Permanentmagneten 55, 56, 85, 86 angeordnet. Die Höhe der Magnettaschen 50, 51, 80, 81weisen jeweils eine Höhe $h_{mi}$ bzw. $h_{ma}$ auf, die sich senkrecht zur Längsrichtung der jeweiligen Magnettasche 50, 51, 80, 81 erstreckt, wobei die Längsrichtungen der Magnettaschen 50, 51, 80, 81 des ersten bzw. zweiten Paars den (mechanischen bzw. geometrischen) Winkel $\alpha_a$ von ca. 100° bis ca. 140° bzw. den (mechanischen bzw. geometrischen) Winkel $\alpha_i$ von ca. 65° bis ca. 112° bilden.

Die Höhen der Permanentmagnete 55, 56 in den Magnettaschen 50, 51 des ersten Paars können gleich groß sein. Die Höhen der Permanentmagnete 85, 86 in den Magnettaschen 80, 81 des zweiten Paars können gleich groß sein.

Die Höhen der Magnettaschen 50, 51, 80, 81 des ersten Paars können gleich groß sein. Die Höhen der Magnettaschen 80, 81 des zweiten Paars können gleich groß sein.

Die Höhe bzw. Höhen der Magnettaschen 50, 51 des ersten Paars kann kleiner sein als die Höhe bzw. Höhen der Magnettaschen 80, 81 des zweiten Paars. Die Höhe $h_{ma}$ des ersten Paars von Magnettaschen 50, 51 kann ca. 2,0 mm bis ca. 4,5 mm, insbesondere ca. 2,0 mm bis ca. 4,5 mm, betragen. Die Höhe $h_{mi}$ des zweiten Paars von Magnettaschen 80, 81 kann ca. 4,0 mm bis ca. 7,5 mm, insbesondere ca. 4,0 mm bis ca. 6,5 mm betragen.

Die Länge der Permanentmagnete 55, 56, 85, 86 ist jeweils (deutlich) kleiner als die Länge der Magnettaschen 50, 51, 80, 81 in Längsrichtung.

Die Fixierungspunkte für die Magnete können auf der Unterseite der Magnettaschen 50, 51, 80, 81, d.h. auf der der Rotormitte zugewandten Seite (bzw. dem Umfangsrand 110 abgewandten Seite) der jeweiligen Magnettasche 50, 51, 80, 81, angeordnet sein. Alternativ oder zusätzlich können die Fixierungspunkte bzw. Haltenasen der Permanentmagnete 55, 56, 85, 86 auf der Oberseite, d.h. der vom Rotormittelpunkt abgewandten Seite, der Magnettaschen 50, 51, 80, 81 angeordnet sein.

Die beiden Magnettaschen 80, 81 des zweiten Paars bilden einen Kreissektor, der durch die beiden Längsrichtungen der Magnettaschen 80, 81 gebildet wird bzw. begrenzt ist. In diesem Kreissektor des zweiten Paars von Magnettaschen 80, 81 ist das erste Paar von Magnettaschen 50, 51 angeordnet.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

**Patentansprüche**

1. Elektrische Maschine umfassend einen Rotor (10) und einen Stator (20), wobei der Rotor (10) Magnettaschen zum Aufnehmen von Permanentmagneten (55, 56, 85, 86) aufweist,
wobei die Magnettaschen zumindest ein erstes Paar von Magnettaschen (50, 51) und ein zweites Paar von Magnettaschen (80, 11) umfassen, wobei das zweite Paar (80, 81) in radialer Richtung bezüglich einer Rotorachse gesehen weiter innen als das erste Paar (50, 51) angeordnet ist,
wobei die Magnettaschen des jeweiligen Paares von Magnettaschen (50, 51, 80, 81) zueinander symmetrisch in Bezug auf eine Symmetrieachse (45) angeordnet sind, wobei die Symmetrieachse (45) in radialer Richtung und durch den Mittelpunkt des Rotors (10) verläuft,
wobei die Magnettaschen des jeweiligen Paares von Magnettaschen (50, 51, 80, 81) derart angeordnet sind, dass ein Abstand der jeweiligen Magnettasche von der Symmetrieachse (45) umso größer wird, je geringer der Abstand zu dem Umfangsrand (110) des Rotors (10) wird,
wobei die Magnettaschen des ersten Paares (50, 51) in einem ersten mechanischen Winkel zueinander angeordnet sind und wobei die Magnettaschen des zweiten Paares (80, 81) in einem zweiten mechanischen Winkel zueinander angeordnet sind, wobei der zweite Winkel im Bereich von ca. 65° bis ca. 112°, insbesondere im Bereich von ca. 88° bis ca. 112°, liegt,
**dadurch gekennzeichnet, dass**

- der erste Winkel im Bereich von ca. 120° bis ca. 140° liegt, dass
- die Magnettaschen des ersten Paares (50, 51) derart angeordnet sind, dass der elektrische Polbedeckungswinkel des ersten Paares von Magnettaschen (50, 51) ca. 59,5° bis ca. 80,0°, insbesondere ca. 59,5° bis ca. 72,0°, beträgt, und dass
- die Magnettaschen des zweiten Paares (80, 81) derart angeordnet sind, dass der elektrische Polbedeckungswinkel des zweiten Paares (80, 81) von Magnettaschen ca. 110,0° bis ca. 122,0°, insbesondere ca. 110,0° bis ca. 116,7°, weiter insbesondere ca. 110,0° bis ca. 116,5°, beträgt.

2. Elektrische Maschine nach Anspruch 1, wobei die Magnettaschen des ersten Paares (50, 51) zueinander beabstandet angeordnet und die Magnettaschen des zweiten Paares (80, 81) zueinander beabstandet angeordnet sind, wobei der kleinste Abstand zwischen den Magnettaschen des zweiten Paares (80, 81) größer ist als der kleinste Abstand zwischen den Magnettaschen des ersten Paares (50, 51).

3. Elektrische Maschine nach Anspruch 1 oder 2, wobei die Magnettaschen des ersten Paares (50, 51) in einem kreissektorförmigen Bereich zwischen den Magnettaschen des zweiten Paares (80, 81) angeordnet sind, wobei beide Paare von Magnettaschen (50, 51, 80, 81) dieselbe Symmetrieachse (45) aufweisen.

4. Elektrische Maschine nach einem der vorhergehenden Ansprüche, wobei
die Magnettaschen des ersten Paares (50, 51) zueinander beabstandet angeordnet sind, wobei der kleinste Abstand zwischen den Magnettaschen des ersten Paares (50, 51) eine Breite von ca. 0,5 mm bis ca. 1,5 mm, insbesondere von ca. 0,5 mm bis ca. 1,2 mm, aufweist, wobei die Magnettaschen des zweiten Paares (80, 81) zueinander beabstandet angeordnet sind, wobei der kleinste Abstand zwischen den Magnettaschen des zweiten Paares (80, 81) eine Breite von ca. 2,0 mm bis ca. 4,0 mm, insbesondere von ca. 2,0 mm bis ca. 3,0 mm aufweist.

5. Elektrische Maschine nach einem der vorhergehenden Ansprüche, wobei
die Magnettaschen des ersten Paares (50, 51) und/oder des zweiten Paares (80, 81) einen kleinsten Abstand zu dem Umfangsrand (110) des Rotors (10) von ca. 0,5 mm bis ca. 1,5 mm aufweisen.

6. Elektrische Maschine nach einem der vorhergehenden Ansprüche, wobei
die Magnettaschen des ersten Paares (50, 51) und/oder die Magnettaschen des zweiten Paares (80, 81) jeweils einen Randbereich (90, 91, 95, 96) aufweisen, der einen sich zur Symmetrieachse (45) hin verjüngenden Abstand zu dem Umfangsrand (110) des Rotors (10) aufweist.

7. Elektrische Maschine nach einem der vorhergehenden Ansprüche, wobei
der Rotor (10) entlang seiner Umfangsrichtung gleichartig aufgebaute Polsegmente (40) aufweist, wobei die jeweils zueinander unmittelbar benachbarten Polsegmente (40) durch Polgrenzen voneinander getrennt sind, wobei die Magnettaschen des zweiten Paares (80, 81) jeweils einen elektrischen Winkelabstand von ca. 7,5° bis ca. 35,0°, insbesondere von ca. 7,5° bis ca. 16,0°, zu den jeweiligen unmittelbar benachbarten Polgrenzen aufweisen.

**8.** Elektrische Maschine nach einem der vorhergehenden Ansprüche, wobei
der Luftspalt (30) zwischen dem Rotor (10) und dem Stator (20) ca. 1,0 mm bis ca. 2,0 mm, insbesondere ca. 1,0 mm bis ca. 1,7 mm, beträgt.

**9.** Elektrische Maschine nach einem der vorhergehenden Ansprüche, wobei
wobei die Höhe der Magnettaschen des ersten Paares (50, 51) sich von der Höhe der Magnettaschen des zweiten Paares (80, 81) unterscheidet, insbesondere die Höhe der Magnettaschen des ersten Paares (50, 51) kleiner als die Höhe der Magnettaschen des zweiten Paares (80, 81) ist.

**Claims**

**1.** Electric machine comprising a rotor (10) and a stator (20),
wherein the rotor (10) has magnet pockets for accommodating permanent magnets (55, 56, 85, 86), wherein the magnet pockets comprise at least a first pair of magnet pockets (50, 51) and a second pair of magnet pockets (80, 11), wherein the second pair (80, 81) is arranged radially further towards the inside than the first pair (50, 51), as seen with respect to a rotor axis,
wherein the magnet pockets of the respective pair of magnet pockets (50, 51, 80, 81) are arranged symmetrically in relation to one another, as seen with respect to an axis of symmetry (45), wherein the axis of symmetry (45) runs in the radial direction and through the centre point of the rotor (10),
wherein the magnet pockets of the respective pair of magnet pockets (50, 51, 80, 81) are arranged such that a distance between the respective magnet pocket and the axis of symmetry (45) increases as the distance to the circumferential periphery (110) of the rotor (10) decreases,
wherein the magnet pockets of the first pair (50, 51) are arranged at a first mechanical angle in relation to one another, and wherein the magnet pockets of the second pair (80, 81) are arranged at a second mechanical angle in relation to one another, wherein the second angle ranges from approximately 65° to approximately 112°, in particular ranges from approximately 88° to approximately 112°,
**characterized in that**

- the first angle ranges from approximately 120° to approximately 140°, **in that**
- the magnet pockets of the first pair (50, 51) are arranged such that the electrical pole-pitch angle of the first pair of magnet pockets (50, 51) is approximately 59.5° to approximately 80.0°, in particular approximately 59.5° to approximately 72.0°, and **in that**

- the magnet pockets of the second pair (80, 81) are arranged such that the electrical pole-pitch angle of the second pair (80, 81) of magnet pockets is approximately 110.0° to approximately 122,0°, in particular approximately 110.0° to approximately 116.7°, and more particularly approximately 110.0° to approximately 116.5°.

**2.** Electric machine according to Claim 1, wherein
the magnet pockets of the first pair (50, 51) are spaced apart from one another and the magnet pockets of the second pair (80, 81) are spaced apart from one another, wherein the smallest distance between the magnet pockets of the second pair (80, 81) is greater than the smallest distance between the magnet pockets of the first pair (50, 51).

**3.** Electric machine according to Claim 1 or 2, wherein
the magnet pockets of the first pair (50, 51) are arranged in a circle-sector-form region between the magnet pockets of the second pair (80, 81), wherein the two pairs of magnet pockets (50, 51, 80, 81) have the same axis of symmetry (45).

**4.** Electric machine according to one of the preceding claims, wherein
the magnet pockets of the first pair (50, 51) are spaced apart from one another, wherein the smallest distance between the magnet pockets of the first pair (50, 51) have a width of approximately 0.5 mm to approximately 1.5 mm, in particular of approximately 0.5 mm to approximately 1.2 mm, wherein the magnet pockets of the second pair (80, 81) are spaced apart from one another, wherein the smallest distance between the magnet pockets of the second pair (80, 81) has a width of approximately 2.0 mm to approximately 4.0 mm, in particular of approximately 2.0 mm to approximately 3.0 mm.

**5.** Electric machine according to one of the preceding claims, wherein
the smallest distance between the magnet pockets of the first pair (50, 51) and/or the second pair (80, 81) and the circumferential periphery (110) of the rotor (10) is approximately 0.5 mm to approximately 1.5 mm.

**6.** Electric machine according to one of the preceding claims, wherein
the magnet pockets of the first pair (50, 51) and/or the magnet pockets of the second pair (80, 81) each have a peripheral region (90, 91, 95, 96) which is spaced apart from the circumferential periphery (110) of the rotor (10) by a distance which tapers in the direction of the axis of symmetry (45).

**7.** Electric machine according to one of the preceding claims, wherein

the rotor (10) has pole segments (40) of similar construction along its circumferential direction, wherein the respectively adjacent pole segments (40) are separated from one another by pole boundaries, wherein the magnet pockets of the second pair (80, 81) are each spaced apart from the respective directly adjacent pole boundaries by an electrical angle of approximately 7.5° to approximately 35.0°, in particular of approximately 7.5° to approximately 16.0°.

8. Electric machine according to one of the preceding claims, wherein
the air gap (30) between the rotor (10) and the stator (20) is approximately 1.0 mm to approximately 2.0 mm, in particular approximately 1.0 mm to approximately 1.7 mm.

9. Electric machine according to one of the preceding claims, wherein
the height of the magnet pockets of the first pair (50, 51) differs from the height of the magnet pockets of the second pair (80, 81), in particular the height of the magnet pockets of the first pair (50, 51) is smaller than the height of the magnet pockets of the second pair (80, 81).

**Revendications**

1. Machine électrique comprenant un rotor (10) et un stator (20),
le rotor (10) possédant des poches à aimant destinées à accueillir des aimants permanents (55, 56, 85, 86),
les poches à aimant comprenant au moins une première paire de poches à aimant (50, 51) et une deuxième paire de poches à aimant (80, 11), la deuxième paire (80, 81) étant disposée plus loin vers l'intérieur que la première paire (50, 51), vue dans la direction radiale en référence à un axe de rotor,
les poches à aimant de la paire respective de poches à aimant (50, 51, 80, 81) étant disposées de manière symétrique l'une par rapport à l'autre en référence à un axe de symétrie (45), l'axe de symétrie (45) suivant un tracé dans la direction radiale et à travers le centre du rotor (10),
les poches à aimant de la paire respective de poches à aimant (50, 51, 80, 81) étant disposées de telle sorte qu'un écart entre la poche à aimant respective et l'axe de symétrie (45) est d'autant plus grand que l'écart par rapport au bord périphérique (110) du rotor (10) diminue, les poches à aimant de la première paire (50, 51) étant disposées l'une par rapport à l'autre à un premier angle mécanique et les poches à aimant de la deuxième paire (80, 81) étant disposées l'une par rapport à l'autre à un deuxième angle mécanique, le deuxième angle étant compris dans la plage d'environ 65° à environ 112°, notamment dans la plage d'environ 88° à environ 112°, **caractérisée en ce que**

- le premier angle est compris dans la plage d'environ 120° à environ 140°, **en ce que**
- les poches à aimant de la première paire (50, 51) sont disposées de telle sorte que l'angle de couverture polaire de la première paire de poches à aimant (50, 51) est d'environ 59,5° à environ 80,0°, notamment d'environ 59,5° à environ 72,0° et **en ce que**
- les poches à aimant de la deuxième paire (80, 81) sont disposées de telle sorte que l'angle de couverture polaire de la deuxième paire (80, 81) de poches à aimant est d'environ 110,0° à environ 122,0°, notamment d'environ 110,0° à environ 116,7°, encore notamment d'environ 110,0° à environ 116,5°.

2. Machine électrique selon la revendication 1, les poches à aimant de la première paire (50, 51) étant disposées de manière espacée l'une de l'autre et les poches à aimant de la deuxième paire (80, 81) étant disposées de manière espacée l'une de l'autre, le plus petit écart entre les poches à aimant de la deuxième paire (80, 81) étant supérieur au plus petit écart entre les poches à aimant de la première paire (50, 51).

3. Machine électrique selon la revendication 1 ou 2, les poches à aimant de la première paire (50, 51) étant disposées dans une zone de forme de secteur de cercle entre les poches à aimant de la deuxième paire (80, 81), les deux paires de poches à aimant (50, 51, 80, 81) possédant le même axe de symétrie (45).

4. Machine électrique selon l'une des revendications précédentes, les poches à aimant de la première paire (50, 51) étant disposées de manière espacée l'une de l'autre, le plus petit écart entre les poches à aimant de la première paire (50, 51) présentant une largeur d'environ 0,5 mm à environ 1,5 mm, notamment d'environ 0,5 mm à environ 1,2 mm, les poches à aimant de la deuxième paire (80, 81) étant disposées de manière espacée l'une de l'autre, le plus petit écart entre les poches à aimant de la deuxième paire (80, 81) présentant une largeur d'environ 2,0 mm à environ 4,0 mm, notamment d'environ 2,0 mm à environ 3,0 mm.

5. Machine électrique selon l'une des revendications précédentes, les poches à aimant de la première paire (50, 51) et/ou les poches à aimant de la deuxième paire (80, 81) présentant un plus petit écart par rapport au bord périphérique (110) du rotor (10) d'environ 0,5 mm à environ 1,5 mm.

**6.** Machine électrique selon l'une des revendications précédentes, les poches à aimant de la première paire (50, 51) et/ou les poches à aimant de la deuxième paire (80, 81) possédant respectivement une zone de bord (90, 91, 95, 96) qui présente un écart par rapport à l'axe de symétrie (45) qui se rétrécit vers le bord périphérique (110) du rotor (10).

**7.** Machine électrique selon l'une des revendications précédentes, le rotor (10) possédant le long de sa direction périphérique des segments polaires (40) de structure identique, les segments polaires (40) qui sont respectivement directement voisins les uns des autres étant séparés entre eux par des limites de pôle, les poches à aimant de la deuxième paire (80, 81) présentant respectivement un écart angulaire électrique d'environ 7,5° à environ 35,0°, notamment d'environ 7,5° à environ 16,0° par rapport aux limites de pôle respectivement directement voisines.

**8.** Machine électrique selon l'une des revendications précédentes, l'entrefer (30) entre le rotor (10) et le stator (20) étant d'environ 1,0 mm à environ 2,0 mm, notamment d'environ 1,0 mm à environ 1,7 mm.

**9.** Machine électrique selon l'une des revendications précédentes, la hauteur des poches à aimant de la première paire (50, 51) étant différente de la hauteur des poches à aimant de la deuxième paire (80, 81), la hauteur des poches à aimant de la première paire (50, 51) étant notamment inférieure à la hauteur des poches à aimant de la deuxième paire (80, 81).

**FIG. 1**

**EP 3 520 199 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8994240 B
- US 20130147299 A1